# EUROPEAN PATENT APPLICATION

(11) **EP 2 826 978 A1**
(43) Date of publication of application: **21.01.2015**
(21) Application number: 14182313.8
(22) Date of filing: 08.07.2011
(51) Int. Cl.: F02B 7/06, F02B 19/10, F02B 19/12, F02B 19/14, F02B 25/04

(54) **A two-stroke internal combustion engine, method operating a two-stroke internal combustion engine and method of converting a two-stroke engine**

(62) Divisional of application: 11770825.5
(71) Applicant: Wärtsilä Schweiz AG, 8401 Winterthur (CH)
(72) Inventor: Nylund, Ingemar, 66580 Kuni (FI); Ott, Marcel, 8406 Winterthur (CH); Sillanpää, Hannu, 65101 Vaasa (FI)
(74) Representative: Intellectual Property Services GmbH

(57) **Abstract**

The invention relates a two-stroke internal combustion engine (10) comprising at least one cylinder (20) with a piston (24) arranged reciprocateably between its top dead center and bottom dead center, and a cylinder cover (26) defining a combustion chamber (22), oxygen containing gas inlet (18) in the lower part of the cylinder (20) to be open into the combustion chamber (22) at least while the piston is at its bottom dead center position, a gaseous fuel inlet (30) arranged in the cylinder between the oxygen containing gas inlet (18) and the cylinder cover (26), and an exhaust valve (28) arranged to the cylinder cover at a center axis of the cylinder. The cylinder cover (26) is provided with pilot ignition pre-chambers (36) opening into the combustion chamber (22) through pre-chamber ports (34).

## Description

### Technical field

The invention relates to a two-stroke internal combustion engine comprising at least one cylinder with a piston arranged reciprocateably between its top dead center and bottom dead center, and a cylinder cover defining a combustion chamber, oxygen containing gas inlet in the lower part of the cylinder to be open into the combustion chamber at least while the piston is at its bottom dead center position, a gaseous fuel inlet arranged in the cylinder between the oxygen containing gas inlet and the cylinder cover and an exhaust valve arranged to the cylinder cover at a center axis of the cylinder.

### Background art

Large two stroke cross head diesel engines operated with heavy fuel oil are commonly used as prime movers for example in large ships. Recently the using of gaseous fuels in internal combustion engine has become of great importance due to its considerably clean combustion process and gas availability. There is a growing awareness of the need for alternative fuel solutions that can reduce emissions while, at the same time, being commercially viable.

US 5,035,206 discloses a dual fuel natural gas / diesel 2-stroke engine having at least one cylinder with a piston in the cylinder, oxygen containing gas inlet port means around the cylinder to be uncovered by downward movement of the piston in the cylinder, oxygen containing gas means for forcing oxygen containing gas through said inlet port means when uncovered, an exhaust port and a valve means therein, diesel injection means to inject diesel fuel into the cylinder once each cycle, and gas injection means for injecting natural gas into the cylinder once each cycle, which gas injection means includes a delivery conduit for natural gas, opening into the cylinder at a location above said oxygen containing gas inlet port means, whereby the piston when descending completely uncovers said conduit before beginning to uncover said inlet port means. According to US 5,035,206 during operation, the engine at idle receives only the diesel fuel. As a load is applied, natural gas begins to be injected. As the gas quantity increases due to an increase in load, the initiation of gas injection through the injector is advanced, while the end or termination of gas injection is unchanged. During the entry of scavenging air which also contains the oxygen for the next combustion, a gas valve injector injects a controlled quantity of natural gas through the conduit into the cylinder of the engine.

Even if the engine described in US 5,035,206 may be operable and advantageous as such there is still a need for a gas operated two stroke engine which will better meet the demands of the present emission and efficiency expectations.

### Disclosure of Invention

Objects of the invention are met by a lean burn two-stroke internal combustion engine comprising at least one cylinder with a piston arranged reciprocateably between its top dead center and bottom dead center, and a cylinder cover defining a combustion chamber, oxygen containing gas inlet in the lower part of the cylinder to opening into the combustion chamber at least while the piston is at its bottom dead center position, a gaseous fuel inlet arranged in the cylinder between the oxygen containing gas inlet and the cylinder cover, and an exhaust valve arranged to the cylinder cover. It is characteristic to the invention that the cylinder cover is provided with at least one pilot ignition pre-chamber opening into the combustion chamber through its pre-chamber port.

This provides the effects and benefits of being capable of utilizing gas at considerably low pressure which make the gas feeding system safe and substantially of simple construction. The location of the a gaseous fuel inlet i.e. gas injection ports is selected so that the gas pressure during the admission of gas into the combustion chamber while the piston is moving towards the top dead center, is lower than 1 MPa. The utilization of pre-chamber facilitates igniting a substantially lean gas mixture in the combustion chamber which provides increased efficiency and reduced oxides of nitrogen (NOx) emissions.

The excess air reduces the temperature of the combustion process and this reduces the amount of NOx produced and since there is also excess oxygen available, the combustion process is more efficient and more power is produced from the same amount of fuel compared to a stoichiometric combustion.

According to an embodiment of the invention the cylinder cover is provided with at least two pre-chambers and the pre-chambers are arranged rotationally symmetrically into the cylinder cover in respect to the center axis of the cylinder. Advantageously the exhaust valve is arranged to the cylinder cover at a center axis of the cylinder.

According to another embodiment of the invention the exhaust valve timing is variably controllable.

According to another embodiment of the invention the pre-chambers are each provided with a pilot fuel injector.

According to another embodiment of the invention the engine comprises at least two gaseous fuel inlets arranged at the same longitudinal positions in the cylinder.

According to still another embodiment of the invention the engine comprises at least two gaseous fuel inlets arranged equally spaced to the circumference of the cylinder.

A method of operating a two-stroke internal combustion engine is described. The method comprises steps of: after the power stroke of the engine arranging the piston to pass oxygen containing gas inlet in the lower part of a cylinder of the engine by a downward movement of the piston and allowing the oxygen containing gas to enter into a combustion chamber of the engine through the inlet, maintaining an exhaust valve of the engine open, and arranging the piston to pass oxygen containing gas inlet in the lower part of a cylinder by an upward movement piston thus stopping the oxygen containing gas to enter into a combustion chamber, introducing gaseous fuel through at least one gaseous fuel inlet arranged in the cylinder and closing the exhaust valve of the engine, compressing the oxygen containing gas and the gaseous fuel in the combustion chamber by arranging the piston to move towards its top dead center and igniting the mixture of oxygen containing gas and the gaseous fuel in at least one pre-chamber arranged in the cylinder cover of the engine and igniting the liquid fuel.

According to an embodiment of the method liquid fuel is introduced into the pre-chamber and the liquid fuel ignited by compression ignition in the at least one pre-chamber.

According to another embodiment of the method fuel is ignited by spark ignition in the at least one pre-chamber.

According to another embodiment of the method fuel is ignited by applying heat from the glow plug in the at least one pre-chamber.

According to another embodiment of the method operating the engine so that the effective compression ratio is ≥ 12:1.

According to another embodiment of the method controlling the closing timing of the exhaust valve so that the effective compression ratio is ≥ 12:1.

According to another embodiment of the method the gaseous fuel into the combustion chamber at a pressure of ≤ 1 MPa.

According to another embodiment of the method operating the engine with liquid fuel only e.g. in case of malfunction of the operation with the gaseous fuel.

Additionally an other method is described. The method of converting a two-stroke engine operated with a liquid fuel into a gas operated two stroke engine, and having a cylinder cover in each cylinder of the engine and an inlet opening for introducing oxygen containing combustion gas into a combustion chamber arranged to a liner of each cylinder of the engine. The method comprising a steps of:
- removing old cylinder cover from each cylinder of the engine,
- arranging a new cylinder cover to the engine, which new cylinder cover comprises an exhaust gas port and a valve, and a pre-chamber for facilitating the ignition of fuel in the combustion chamber,
- arranging at least one fuel opening to the liner of each cylinder at a distance towards the cylinder cover from the inlet opening,
- arranging a gaseous fuel metering valve unit in connection with the fuel opening and
- connecting the gaseous fuel metering valve unit to a source of gaseous fuel.

### Brief Description of Drawings

In the following, the invention will be described with reference to the accompanying exemplary, schematic drawings, in which
Figure 1 illustrates a two-stroke engine according to an embodiment of the invention,
Figure 2 illustrates an operation of a two-stroke engine according to an embodiment of the invention, and
Figure 3 illustrates a detail of a two-stroke engine according to an embodiment of the invention,

### Detailed Description of Drawings

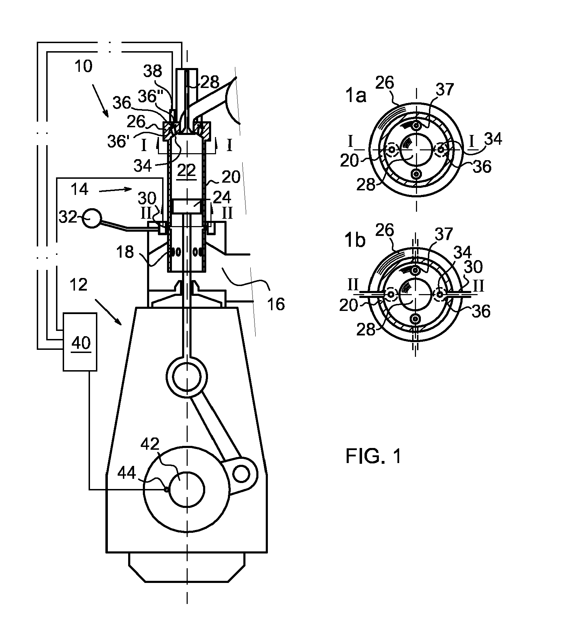

Figure 1 shows schematically a two-stroke engine 10. The engine comprises a body part 12 and a cylinder unit 14 of several cylinder units of the engine 10. The engine is further provided with an inlet conduit oxygen containing gas to be used for combustion of fuel. The oxygen containing gas is often the air. The inlet conduit is connected to a compressor unit or a like (not shown) for providing pressurized oxygen containing gas, which is fed into the engine through an oxygen containing gas inlet 18. The oxygen containing gas inlet 18 comprises several openings arranged to the circumference of a cylinder 20 wall. The oxygen containing gas inlet 18 is arranged at the lower part of the cylinder 20 to be open into the combustion chamber 22 while the piston 24 is at its bottom dead center position or in proximity thereof. The combustion chamber 22 is defined by the cylinder 20, the piston 24 and a cylinder cover 26 of the engine. The cylinder cover 26 is provided with an exhaust valve 28 arranged to therein, advantageously at a center axis of the cylinder. As can be seen from the figure 1 the engine is a crosshead engine. The engine comprises further a gaseous fuel inlet 30 arranged in the cylinder 20 between the oxygen containing gas inlet 18 and the cylinder cover 26. The gaseous fuel inlet 30 is preferably arranged longitudinally at such a location that the piston 24, when moving upwards towards the cylinder cover, covers the inlet 30 preventing the hot and high pressure gases form combustion to penetrate the gas valve and supply system.

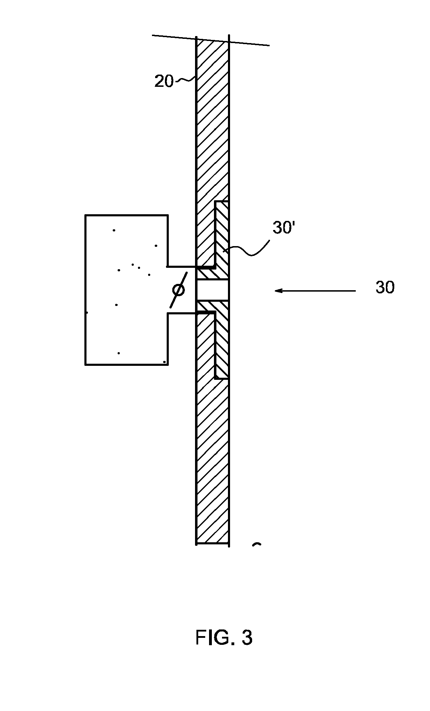

According to an embodiment of the invention the gaseous fuel inlet 30 comprises a replaceable, separate insert 30' as depicted in figure 3, arranged in the liner of the cylinder 20. The insert 30' has an opening with specific characteristics, like predetermined cross section flow area. Such an insert may be changed to match the cross section area e.g. with the fuel gas calorific value to be utilized.

The gaseous fuel inlet 30 is provided with a control valve system by means of which the admission of the gas may be controlled independently of the position of the piston, while the piston is below the gaseous fuel inlet 30 in the cylinder 20. The gaseous fuel inlet 30 is connected to a source of gas 32 from which the gaseous fuel is introduced into the combustion chamber at a pressure of ≤ 1 MPa.

In figure 1 there are shown projections I-I and II-II of the cylinder of the engine in the sections 1a and 1b. The cylinder cover 26 is provided three pilot ignition pre-chamber ports 34 which opens to the combustion chamber 22. Each of the ports 34 is in connection with a pilot ignition pre-chamber 36 in the cylinder cover 26. There is also a pilot fuel injector 38 arranged to inject the pilot fuel into the pre-chamber 36. Thus, advantageously a two-stroke engine cylinder cover assembly according to an embodiment comprises an exhaust valve and port, at least one pre-chamber and at least one nozzle hole for a liquid fuel injector 38 arranged thereto.

The pre-chambers 36 are utilized to provide a higher kinetic energy for igniting the substantially lean gas mixture in the combustion chamber 22 providing better penetration of the pre-ignition. In the pre-chamber the lean oxygen containing gas/gas mixture coming from the combustion chamber 22 can be ignited according to an embodiment of the invention by the injection of a liquid fuel reactive in excess of oxygen and self igniting beyond pressure and temperature conditions prevailing in the pre-chamber 36.

According to another embodiment of the invention a glow plug 36" is assembled and used to assist the ignition or a spark plug 36' to accomplish the ignition of the gas instead of the pilot fuel. The shape of the pre-chamber is dependent on the actual method of ignition. Pilot fuel ignition with or without glow plug can provide higher ignition energy than a conventional spark pre-chamber ignition system. The requirements are generally fast and repeatable mixing of the oxygen containing gas/gas fuel mixture introduced into the pre-chamber and of the pilot fuel to be injected so, that an efficient circulation and fast mixing of the fuel gas with the pilot fuel injected is accomplished.

The provision of the pre-chambers results in repeatable and powerful combustion both in the pre-chamber as well as in the combustion chamber, which results in higher engine efficiency and increased combustion stability. The result is also lesser harmful emissions relative to the output of the engine.. Preferably the introduction pressure of the gaseous fuel is less than 1 MPa.

As can be seen from the figure 1 section 1 a the pre-chambers 36 are arranged rotationally symmetrically and equally spaced into the cylinder cover 26. This provides substantially equal distribution of the combustion front in the cross section of the combustion chamber 22.

The figure 1 section 1b in turn shows that the engine 10 comprises at least two gaseous fuel inlets 30 arranged at the same longitudinal positions in the cylinder 20. Also the gaseous fuel inlets 30 are arranged rotationally equally spaced to the circumference of the cylinder 20.

The cylinder cover 26 for two-stroke gas engine comprises according to an embodiment of the invention three pre-chambers 36 arranged rotationally equally spaced and between each pre-chamber a back-up fuel injector 37 also arrange rotationally equally spaced. This is shown in figure 1 sections 1 a and 1b. The back-up fuel injectors are injectors for liquid fuel. The back-up fuel injectors are dimensioned to provide the operation of the engine with 100% of the power obtained by operating the engine with the gaseous fuel, while the pilot fuel injectors are capable of practically only ignite the gaseous fuel.

Thus the engine may be operated with liquid fuel only making use of the fuel injectors e.g. in case of malfunction of the operation with the gaseous fuel.

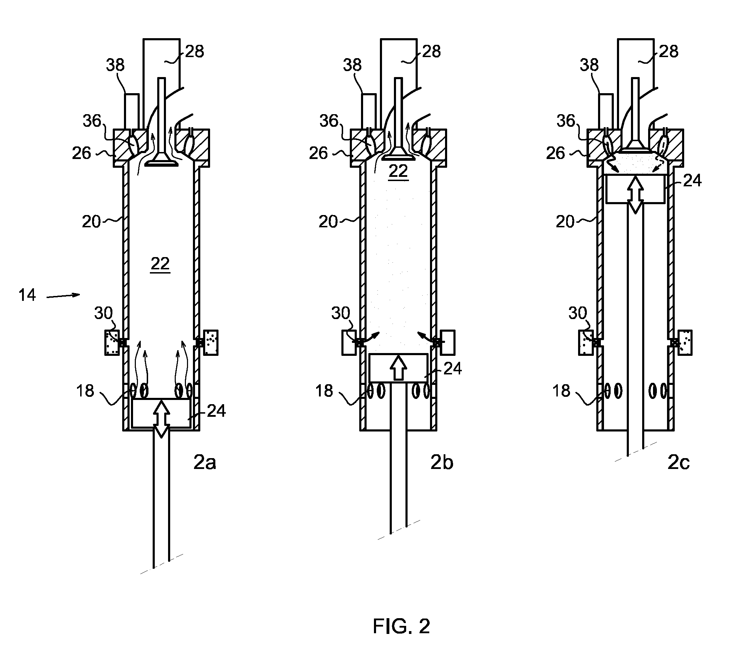

The method of operating a two-stroke engine 10 is explained in the following with the reference to the figure 2 and its parts 2a, 2b, and 2c depicting different stages of the working cycle of the engine. The part 2a describes a scavenging phase after the power stroke of the engine. The piston 24 has passed the oxygen containing gas inlet 18 in the lower part of a cylinder 20 by a downward movement of the piston during the power stroke. The piston 24 is at is bottom dead center and the oxygen containing gas, such as the air, is allowed to enter into the combustion chamber of the engine.. Since the inlet is connected to a compressor the gas is pressurized and it is thus flown into the combustion chamber.(pressure difference between inlet and outlet causes the flow) Simultaneously the exhaust valve 28 is maintained open and therefore the removal of combustion gases from the combustion chamber may take place while the fresh charge is entered into the combustion chamber.

Next the upward movement of the piston 24 commences and the piston is arranged to pass the oxygen containing gas inlet 18 in the lower part of a cylinder 20 by an upward movement piston, which is shown in part 2b in figure 2. Thus the entering of oxygen containing gas into a combustion chamber is stopped. At the stage shown in part 2b the closing movement of the exhaust valve 28 has started. That takes place after injection of the fuel. Now gaseous fuel is introduced through the gaseous fuel inlet 30 in the cylinder 20 and the exhaust valve 28 is closed. Timing of the gaseous fuel introduction, closing of the exhaust valve are controlled so that no unburned gaseous fuel is escaped by the scavenging action. The position of the piston is determined by the geometry of the crank shaft, connecting rod, piston rod and piston. The oxygen containing gas and the gaseous fuel are compressed in the combustion chamber by arranging the piston 24 to move towards its top dead center until the ignition of the charge takes place. This is shown in the part 2c of figure 2. The mixture of oxygen containing gas and the gaseous fuel is ignited by introducing 38 liquid fuel into the pre-chamber 36 arranged in to the cylinder cover 26. The liquid fuel along with the gaseous fuel and oxygen ignites in the pre-chamber and since the pre-chamber opens into the combustion chamber the charge in the combustion chamber ignites subsequently since combustion in the pre-chamber expands into the main combustion chamber.

The liquid fuel 38 may be ignited by compression ignition in the pre-chamber 36. During and after the combustion of the fuel material the power stroke takes place finally resulting in the situation shown in the part 2a.

Now turning back to figure 1 the engine is provided with a control system 40, which reads the information of the position of the crankshaft 42 of the engine by means of a probe 44. The control system is connected to operate the pilot fuel injector 38 and the exhaust valve in the cylinder cover 26. This way particularly the exhaust valve 28 timing is variably controllable and also controllable without fixed relationship to the position of the piston 24. Thus the timing and position of the exhaust valve 28 may be controlled based on the actual working circumstances of the engine. Preferably the engine is operated so that the effective compression ratio is ≥ 12:1. According to an embodiment of the invention the effective compression ratio is controlled to be ≥ 12:1 by controlling the closing of the exhaust valve in relation to the position of the piston 24 during the scavenging / compression stage.

The control system 40 is also arranged to control the operation of the further a gaseous fuel inlet 30 and its timing in relation to the position of the piston 24.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A lean burn two-stroke internal combustion engine (10) comprising at least one cylinder (20) with a piston (24) arranged reciprocateably between its top dead center and bottom dead center, and a cylinder cover (26) defining a combustion chamber (22), an oxygen containing gas inlet (18) in the lower part of the cylinder (20) opening into the combustion chamber (22) at least while the piston is at its bottom dead center position, a gaseous fuel inlet (30) arranged in the cylinder between the oxygen containing gas inlet (18) and the cylinder cover (26), and an exhaust valve (28) arranged to the cylinder cover, **characterized in that** the cylinder cover (26) is provided with at least one pilot ignition pre-chamber (36) opening into the combustion chamber (22) through its pre-chamber port (34) for igniting the substantially lean gas mixture in the combustion chamber (22) and that the exhaust valve (28) timing is variably controllable.

2. A two-stroke engine according to claim 1, **characterized in that** the engine (10) is provided with a control system (40) connected to operate pilot fuel injector (38), and the gaseous fuel inlet (30) and the exhaust valve (28) such that no unburned gaseous fuel is escaped by the scavenging action.

3. A two-stroke engine according to claim 1, **characterized in that** the exhaust valve is arranged to the cylinder cover at a center axis of the cylinder.

4. A two-stroke engine according to claim 3, **characterized in that** the cylinder cover (26) is provided with several pilot ignition pre-chambers (36) opening into the combustion chamber (22) through pre-chamber ports (34).

5. A two-stroke engine according to claim 4, **characterized in that** the pre-chambers (36) are arranged rotationally symmetrically into the cylinder cover in respect to the center axis of the cylinder.

6. A two-stroke engine according to claim 4, **characterized in that** the pre-chambers are each provided with a pilot fuel injector (38).

7. A two-stroke engine according to claim 4, **characterized in that** the pre-chambers are each provided with a glow plug (38").

8. A two-stroke engine according to claim 4, **characterized in that** the pre-chambers are each provided with a spark plug (38').

9. A two-stroke engine according to claim 1, **characterized in that** the engine comprises at least two gaseous fuel inlets (30) arranged at the same longitudinal positions in the cylinder (20).

10. A two-stroke engine according to claim 1, **characterized in that** the engine comprises at least two gaseous fuel inlets (30) arranged equally spaced to the circumference of the cylinder.
